# EUROPEAN PATENT APPLICATION

(11) **EP 4 564 908 A1**
(43) Date of publication of application: **04.06.2025**
(21) Application number: 22952356.8
(22) Date of filing: 27.07.2022
(51) Int. Cl.: H04W 36/00

(54) **INFORMATION PROCESSING METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: WU, Yumin, Beijing 100085 (CN); XIONG, Yi, Beijing 100085 (CN)
(74) Representative: Dehns Germany Partnerschaft mbB
(86) International application number: PCT/CN2022/108383
(87) International publication number: WO 2024/020894

(57) **Abstract**

Provided in the embodiments of the present disclosure are an information processing method and apparatus, a communication device, and a storage medium. The information processing method executed by a terminal comprises: performing a corresponding operation with respect to the measurement of a candidate cell or a candidate cell group that has been subjected to a configuration change (S1110).

## Description

### TECHNICAL FIELD

The present disclosure relates to, but is not limited to, the field of wireless communication technology, and in particular to an information processing method and an apparatus, a communication device and a storage medium.

### BACKGROUND

In the fifth-generation mobile communication (5th Generation, 5G) system, the network side can provide a terminal with multiple preconfigured cells (or cell groups).

The network device on the network side can subsequently control the terminal to change between multiple preconfigured cells or candidate cell groups through Layer 1 (L1) layer signaling and/or Layer 2 (L2) layer signaling.

The L1 layer signaling may include Downlink Control Information (Downlink Control Information, DCI).

The L2 layer signaling may include Media Access Control-Control Element (MAC-CE).

For example, the serving cell or serving cell group of the terminal is changed from the preconfigured cell or candidate cell group-1 to the preconfigured cell or candidate cell group-2.

### SUMMARY

The embodiments of the present disclosure provide an information processing method and an apparatus, a communication device and a storage medium.

According to a first aspect of the embodiments of the present disclosure, there is provided an information processing method, performed by a terminal, including:
performing a corresponding operation on a measurement of a candidate cell or a candidate cell group with a changed configuration.

According to a second aspect of the embodiments of the present disclosure, there is provided an information processing method, performed by a network device, including:
determining a candidate cell or candidate cell group with a changed configuration at a terminal;
performing a corresponding operation on measurement reporting of the candidate cell or candidate cell group with the changed configuration at the terminal.

According to a third aspect of the embodiments of the present disclosure, there is provided an information processing device, including:
a first execution module, configured to perform a corresponding operation on a measurement of a candidate cell or a candidate cell group with a changed configuration.

According to a fourth aspect of the embodiments of the present disclosure, there is provided an information processing device, including:
a second determination module, configured to determine a candidate cell or a candidate cell group with a changed configuration at a terminal; and
a second execution module, configured to perform a corresponding operation on measurement reporting of the candidate cell or candidate cell group with the changed configuration at the terminal.

According to a fifth aspect of the embodiments of the present disclosure, there is provided a communication device comprising a processor, a transceiver, a memory, and an executable program stored on the memory and capable of being run by the processor, wherein the processor executes the information processing method according to any one of the above first aspect or second aspect when running the executable program.

According to a sixth aspect of the embodiments of the present disclosure, there is provided a computer storage medium, wherein the computer storage medium stores an executable program; after the executable program is executed by the processor, the method according to any one of the above first aspect or second aspect can be implemented.

In the technical solution provided by the embodiment of the present disclosure, if the configuration of the candidate cell and/or the candidate cell group of the terminal changes, the terminal and/or the base station will perform corresponding operations on the measurement of the candidate cell or the candidate cell group with the changed configuration, so that the base station and the terminal do not need to issue instructions for the measurement change of the candidate cell and/or the candidate cell with the changed configuration, thereby reducing the signaling overhead.

It should be understood that the above general description and the detailed description below are only exemplary and explanatory, and cannot limit the embodiment of the present disclosure.

### BRIEF DESCRIPTION OF THE DRAWINGS

The drawings herein are incorporated into the specification and constitute a part of the specification, showing the embodiments of the present disclosure and used together with the specification to explain the principles of the embodiments of the present disclosure.
FIG. 1 is a schematic diagram of a structure of a wireless communication system according to an example embodiment;
FIG. 2 is a flow diagram of an information processing method according to an example embodiment;
FIG. 3A is a flow diagram of an information processing method according to an example embodiment;
FIG. 3B is a flow diagram of an information processing method according to an example embodiment;
FIG. 4A is a flow diagram of an information processing method according to an example embodiment;
FIG. 4B is a flow diagram of an information processing method according to an example embodiment;
FIG. 5 is a schematic diagram of a structure of an information processing device according to an example embodiment;
FIG. 6 is a schematic diagram of a structure of an information processing device according to an example embodiment;
FIG. 7 is a schematic diagram of a structure of a terminal according to an example embodiment;
FIG. 8 is a schematic diagram of a structure of a network device according to an example embodiment.

### DETAILED DESCRIPTION

Here, example embodiments will be described in detail, and examples thereof are shown in the accompanying drawings. When the following description refers to the drawings, unless otherwise indicated, the same numbers in different drawings represent the same or similar elements. The embodiments described in the following example embodiments do not represent all embodiments consistent with the embodiments of the present disclosure. Instead, they are only examples of devices and methods consistent with some aspects of the embodiments of the present disclosure.

The terms used in the embodiments of the present disclosure are only for the purpose of describing specific embodiments and are not intended to limit the embodiments of the present disclosure. The singular forms of "a", "an", "said" and "the" used in the present disclosure are also intended to include plural forms unless the context clearly indicates other meanings. It should also be understood that the terms and/or used herein refer to and include any or all possible combinations of one or more associated listed items.

It should be understood that although the terms first, second, third, etc. may be used in the embodiments of the present disclosure to describe various information, such information should not be limited to these terms. These terms are only used to distinguish the same type of information from each other. For example, without departing from the scope of the embodiments of the present disclosure, the first information may also be referred to as the second information, and similarly, the second information may also be referred to as the first information. Depending on the context, the word "if" as used herein can be interpreted as "when..." or "upon..." or "in response to determining".

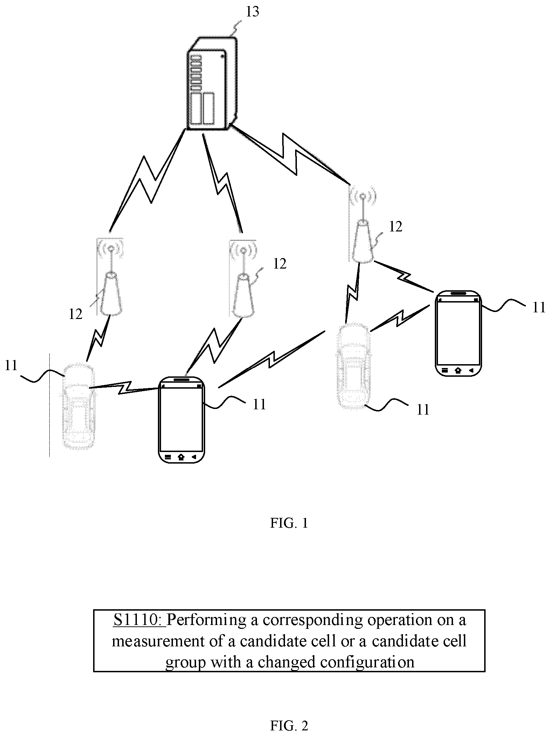

Please refer to FIG. 1, which shows a schematic diagram of a structure of a wireless communication system provided by an embodiment of the present disclosure. As shown in FIG. 1, the wireless communication system is a communication system based on cellular mobile communication technology, and the wireless communication system may include several UEs 11 and several access devices 12.

UE 11 can be a device that provides voice and/or data connectivity to users. UE 11 can communicate with one or more core networks via a radio access network (RAN). UE 11 can be an Internet of Things UE, such as a sensor device, a mobile phone (or called "cellular" phone), and a computer with an Internet of Things UE. For example, it may be a fixed, portable, pocket-sized, handheld, computer-built-in or vehicle-mounted device, such as station (STA), subscriber unit, subscriber station, mobile station, mobile, remote station, access point, remote terminal, access terminal, user terminal, user agent, user device, or user equipment (UE). Alternatively, UE 11 may also be a device of an unmanned aerial vehicle. Alternatively, UE 11 may also be a vehicle-mounted device, for example, a trip computer with a wireless communication function, or a wireless communication device connected externally to the trip computer. Alternatively, UE 11 may also be a roadside device, for example, a street lamp, a signal lamp or other roadside device with a wireless communication function.

Access device 12 may be a network-side device in a wireless communication system. The wireless communication system may be a 4th generation mobile communication (4G) system, also known as a long-term evolution (LTE) system; or, the wireless communication system may be a 5G system, also known as a new radio (NR) system or a 5G NR system. Alternatively, the wireless communication system may also be a next generation system of a 5G system. The access network in the 5G system may be called NG-RAN (New Generation-Radio Access Network). Alternatively, an MTC system.

Access device 12 may be an evolved access device (eNB) used in a 4G system. Alternatively, the access device 12 may also be an access device (gNB) that adopts a centralized distributed architecture in a 5G system. When the access device 12 adopts a centralized distributed architecture, it generally includes a central unit (CU) and at least two distributed units (DU). The central unit is provided with a protocol stack of a packet data convergence protocol (PDCP) layer, a radio link layer control protocol (RLC) layer, and a media access control (MAC) layer; the distributed unit is provided with a physical (PHY) layer protocol stack. The specific implementation of the access device 12 is not limited in the embodiment of the present disclosure.

A wireless connection may be established between the access device 12 and the UE 11 through a wireless air interface. In different implementations, the wireless air interface is a wireless air interface based on the fourth generation mobile communication network technology (4G) standard; or, the wireless air interface is a wireless air interface based on the fifth generation mobile communication network technology (5G) standard, such as a new radio; or, the wireless air interface may also be a wireless air interface based on the next generation mobile communication network technology standard of 5G.

In the 5G system, due to the use of the dual connectivity (DC) architecture, for a UE that supports dual connectivity, there can be two cells or two candidate cell groups.

The master cell or master cell group (MCG) corresponds to the master node (MN) on the network side.

The secondary cell or secondary cell group (SCG) corresponds to the secondary node (SN) on the network side.

MCG includes 1 primary cell (PCell) and 1 or more secondary cells (SCell).

SCG includes 1 primary secondary cell or primary secondary cell group (PSCell) and 1 or more SCells. PCell and PSCell can be collectively referred to as special cells (SpCell) or special cell groups.

For example, each cell or candidate cell group will be assigned a serving cell or candidate cell group configuration (e.g., ServingCellConfig).

The serving cell (or serving cell group) configuration will be associated with a serving cell or candidate cell group identifier (such as ServCellIndex).

This identifier can be configured to uniquely identify a serving cell or candidate cell group within the terminal.

The serving cell or candidate cell group identifier of PCell is 0.

A serving cell or candidate cell group will be associated with a hybrid automatic repeat request (HARQ) entity, and the HARQ entity includes multiple HARQ processes.

When configuring UE measurement reporting, the configuration content includes:
measurement object configuration; and
measurement reporting configuration.

Each measurement reporting configuration can contain a specific measurement report trigger event. The event (measurement event) that triggers the user equipment (UE) measurement result reporting of the current communication system mainly include:
Class A events for measurement of this communication system:
   Event A1 (Serving becomes better than threshold), that is, the signal quality of the serving cell or candidate cell group is better than a threshold.
   Event A2 (Serving becomes worse than threshold), that is, the signal quality of the serving cell or candidate cell group is lower than the threshold.
   Event A3 (Neighbour becomes offset better than PCell/PSCell), that is, the signal quality of the neighboring cell or candidate cell group is better than the signal quality of the PCell/PSCell by a certain value.
   Event A4 (Neighbour becomes better than threshold), that is, the signal quality of the neighboring cell or candidate cell group is better than the threshold.
   Event A5 (PCell/PSCell becomes worse than threshold1 and neighbor becomes better than threshold2), that is, the signal quality of the PCell/PSCell is lower than the threshold, and the signal quality of the neighboring cell or candidate cell group is better than the threshold.
   Event A6 (Neighbour becomes offset better than SCell), that is, the signal quality of the neighboring cell or candidate cell group is better than the signal quality of the SCell by a certain value.
Class B events for measurement of a different communication system:
   Event B1 (Inter RAT neighbour becomes better than threshold), that is, the signal quality of the neighboring cell or candidate cell group of the different system is better than the threshold.
   Event B2 (PCell becomes worse than threshold1 and inter RAT neighbor becomes better than threshold2), that is, the signal quality of the PCell/PSCell is lower than the threshold, and the signal quality of the neighboring cell or candidate cell group of the different system is better than the threshold.

The UE measurement result is based on the configuration of different measurement events. When the entering condition of the measurement event is met, the timer is started. After the timer corresponding to the entering condition times out, the UE reports the measurement result. After the entering condition of the measurement event is met, if the UE measurement result meets the leaving condition, the UE stops the timer and decides whether to report the measurement result when the leaving condition is met according to the network configuration.

The mobility process based on conditional triggering can be as follows:
In the 5G system, the terminal can be based on a condition pre-configured by the network and a pre-configured cell or candidate cell group corresponding to the condition. When the terminal meets the pre-configured condition (such as a specific measurement event), the terminal changes the serving cell or candidate cell group to the pre-configured cell or candidate cell group. The mobility process based on conditional triggering includes:
conditional handover (CHO);
conditional primary secondary cell or candidate cell group addition (conditional PSCell Addition, CPA);
conditional primary secondary cell or candidate cell group change (conditional PSCell Change, CPC).

The terminal can also change the serving cell or candidate cell group configuration according to the network instruction after the pre-configured condition is met. For example, the PCell configuration of the terminal is changed from candidate cell or candidate cell group configuration-1 to candidate cell or candidate cell group configuration-2.

As shown in FIG. 2, the embodiment of the present disclosure provides an information processing method, which is executed by the terminal, and the method includes:
S1110: Performing a corresponding operation on a measurement of a candidate cell or a candidate cell group with a changed configuration.

The terminal can be various types of terminals supporting dual connectivity. The terminal can specifically be a mobile phone, a tablet computer, a wearable device, a vehicle-mounted device, a smart home device and/or a smart office device, etc.

The terminal can be configured with multiple candidate cells or multiple candidate cell groups.

The serving cell of the terminal can be one or more of the multiple candidate cells.

The serving cell group of the terminal can be one or more of the multiple candidate cell groups.

Which candidate cells or candidate cell groups the terminal has may be indicated by the configuration (i.e., configuration information) sent by a network device such as a base station.

In some embodiments, after the network device configures a candidate cell or a candidate cell group for the terminal, the configuration of the candidate cell or the candidate cell group of the terminal may change due to changes in the cell and/or wireless environment and/or cell load.

For example, the method further includes:
determining that the configuration of the candidate cell or the candidate cell group has changed.

Determining that the configuration of the candidate cell or the candidate cell group has changed may include at least one of:
receiving a network indication, where the network indication indicates a configuration change of the candidate cell or the candidate cell group; and
detecting a trigger event that triggers the configuration change of the candidate cell or the candidate cell group.

The event information of the trigger event may be pre-configured through a RRC signaling or a MAC CE.

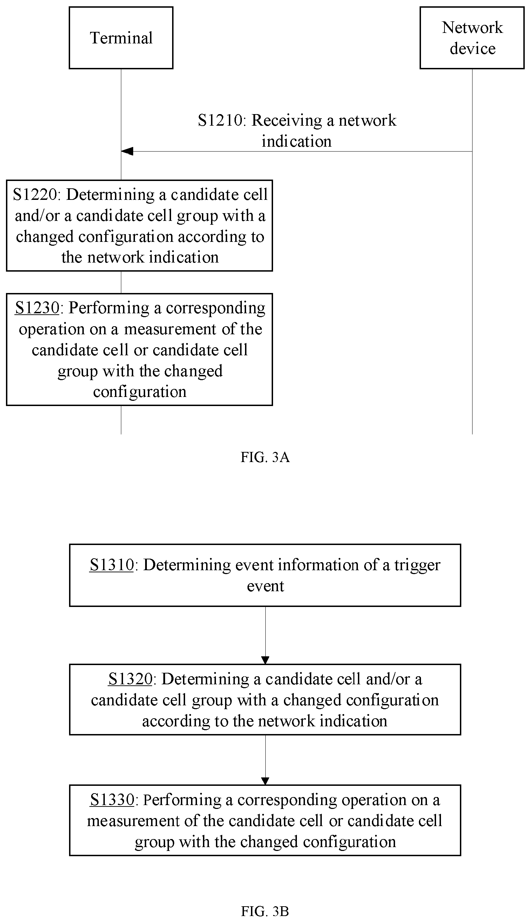

Therefore, in some embodiments, as shown in FIG. 3A, the embodiment of the present disclosure provides an information processing method, which is executed by a network device, and the method includes:
S1210: receiving a network indication;
S1220: determining a candidate cell and/or a candidate cell group with a changed configuration according to the network indication;
S1230: performing a corresponding operation on a measurement of the candidate cell or candidate cell group with the changed configuration.

Therefore, in some other embodiments, as shown in FIG. 3B, the embodiment of the present disclosure provides an information processing method, which is executed by a network device, and the method includes:
S1310: determining event information of a trigger event. For example, the event information may include event information configured by the network device through a network signaling and/or event information agreed upon by a network protocol;
S1320: determining a candidate cell and/or a candidate cell group with a changed configuration according to the network indication;
S1330: performing a corresponding operation on a measurement of the candidate cell or candidate cell group with the changed configuration.

In some embodiments, the configuration change of the candidate cell or the candidate cell group may include at least one of:
a state change of the configuration of the candidate cell or the candidate cell group, for example, a change between an available state and an unavailable state;
a content change of the configuration of the candidate cell or the candidate cell group, for example, the content change of the configuration of the candidate cell or the candidate cell group may be a configuration update of the candidate cell or the candidate cell group.

In an embodiment of the present disclosure, the network device may indicate to the terminal the configuration change of the candidate cell or the candidate cell group through a network signaling.

In an embodiment of the present disclosure, if the configuration of the candidate cell or the candidate cell group changes, the terminal will perform a corresponding operation on the measurement-related operation of the candidate cell or the candidate cell group with the changed configuration according to the configuration change of the candidate cell or the candidate cell group without the need for additional signaling indication from the network device.

The measurement-related operation of the candidate cell or the candidate cell group includes but is not limited to: the measurement operation of the candidate cell or the candidate cell group and/or the reporting operation of the measurement report of the candidate cell or the candidate cell group, etc.

In this way, without the need for additional signaling, if the terminal determines that the configuration of the candidate cell and/or the candidate cell group has changed, the measurement will also change synchronously, which realizes the measurement change corresponding to the configuration change of the candidate cell and/or the candidate cell group on the one hand, and reduces the instruction overhead required for the measurement change on the other hand.

In some embodiments, performing the corresponding operation on the measurement of the candidate cell or the candidate cell group with the changed configuration includes:
the configuration of the candidate cell or the candidate cell group being changed from an available state to an unavailable state, and not reporting the measurement report of the candidate cell or the candidate cell group with the configuration changed to an unavailable state.

If the configuration of the candidate cell is in an available state, the serving cell of the terminal can select the candidate cell; and if the configuration of the candidate cell group is in an available state, the serving cell group of the terminal can select the candidate cell group.

If the configuration of the candidate cell is changed to an unavailable state, the serving cell of the terminal will not be selected as the candidate cell, and if the configuration of the candidate cell group is in an unavailable state, the serving cell group of the terminal will not be selected as the candidate cell group.

Therefore, when the configuration of the candidate cell or the candidate cell group is switched from an available state to an unavailable state, the terminal can stop reporting the measurement reports of these candidate cells or candidate cell groups, thereby reducing unnecessary reporting.

For example, the configuration of the candidate cell is switched from an available state to an unavailable state, and there may be at least two situations as follows:
the configuration of the candidate cell and/or the candidate cell group is deactivated; for example, the configuration of the corresponding cell and/or the candidate cell group is deactivated according to network signaling and/or protocol agreement;
   and/or,
the configuration of the candidate cell and/or the candidate cell group is updated, so that the original configuration of the candidate cell and/or the candidate cell group is changed from an available state to an unavailable state.

There are many reasons why the configuration of the terminal candidate cell and/or candidate cell group switches from an available state to an unavailable state, and the specific implementation is not limited to the above examples.

The candidate cell includes a reference cell and a non-reference cell; and/or, the candidate cell group includes a reference cell group and a non-reference cell group.

The reference cell is different from the non-reference cell. The reference cell group is different from the non-reference cell group.

Therefore, in some embodiments, the method further includes:
determining whether the candidate cell changed from the available state to the unavailable state is a reference cell; and/or, determining whether the candidate cell group changed from the available state to the unavailable state is a reference group.

The reference cell is an important cell of the terminal, and the reference cell group is an important cell group of the terminal. At this time, even if the configuration of the reference cell and/or the reference cell group changes, if the terminal stops measuring the reference cell, it may cause the terminal to have a large delay when it needs to use the reference cell and/or the reference cell group for communication later.

Therefore, in the embodiment of the present disclosure, the configuration of the candidate cell or candidate cell group being changed from the available state to the unavailable state, and not reporting the measurement report of the candidate cell or candidate cell group with the configuration changed to the unavailable state includes:
the configuration of the non-reference cell or non-reference cell group being changed from the available state to the unavailable state, and not reporting the measurement report of the non-reference cell or non-reference cell group with the configuration changed to the unavailable state.

The non-reference cell is a candidate cell other than the reference cell. The non-reference cell group may be a candidate cell group other than the reference cell group.

In the embodiment of the present disclosure, only when the configuration of the non-reference cell and/or non-reference cell group is switched from the available state to the unavailable state, it is determined that the measurement report of the non-reference cell and/or non-reference cell group with the configuration changed is not reported.

In some embodiments, performing the corresponding operation on the measurement of the candidate cell or candidate cell group with the changed configuration includes:
in response to determining that the configuration of the candidate cell has changed from the available state to the unavailable state and the candidate cell is a reference cell, maintaining the reporting of the measurement report of the reference cell according to a measurement configuration of the reference cell;
   or,
in response to determining that the configuration of the candidate cell group has changed from the available state to the unavailable state and the candidate cell group is a reference cell group, maintaining the reporting of the measurement report of the reference cell group according to a measurement configuration of the reference cell group.

If the candidate cell that has changed from the available state to the unavailable state is a reference cell, the measurement-related operation is maintained according to the measurement configuration of the cell.

In other embodiments, reference cells and non-reference cells may not be distinguished, and operations that are not performed on measurement reports may be uniformly performed on the candidate cell and/or candidate cell group with the configuration in the unavailable state.

In some embodiments, the configuration of the candidate cell or candidate cell group being changed from the available state to the unavailable state, and not reporting the measurement report of the candidate cell or candidate cell group with the configuration changed to the unavailable state includes at least one of:
the configuration of the candidate cell or candidate cell group being changed from the available state to the unavailable state, and determining that a measurement event configured by the candidate cell or candidate cell group with the configuration changed to the unavailable state is not satisfied;
the configuration of the candidate cell or candidate cell group being changed from the available state to the unavailable state, and determining that all measurement events of the candidate cell or candidate cell group with the configuration changed to the unavailable state are not satisfied;
the configuration of the candidate cell or candidate cell group being changed from the available state to the unavailable state, and determining that a measurement event associated with the mobility process based on conditional triggering is not satisfied;
the configuration of the candidate cell or candidate cell group being changed from the available state to the unavailable state, and partially or completely deleting the measurement configuration of the candidate cell or candidate cell group with the configuration changed to the unavailable state;
the configuration of the candidate cell or candidate cell group being changed from the available state to the unavailable state, and stopping the measurement of the candidate cell or candidate cell group with the configuration changed to the unavailable state;
the configuration of the candidate cell or candidate cell group being changed from the available state to the unavailable state, and discarding the measurement result of the candidate cell or candidate cell group with the configuration changed to the unavailable state;
the configuration of the candidate cell or candidate cell group being changed from the available state to the unavailable state, and deactivating the measurement configuration of the candidate cell or candidate cell group with the configuration changed to the unavailable state.

If the configuration of the candidate cell or candidate cell group changes from the available state to the unavailable state, the measurement configuration of the candidate cell or candidate cell group with the configuration changed to the available state does not need to take effect or the measurement result reporting is useless.

In order to reduce unnecessary measurement reporting, various methods can be used to reduce unnecessary signaling overhead and/or unnecessary measurements.

For example, measurement is no longer performed, or the measurement result is no longer be reported, or the measurement event not meeting the measurement result reporting is no longer determined according to the measurement configuration of the candidate cell or candidate cell group with the configuration in the unavailable state, or the measurement configuration is deactivated, or the measurement result is discarded, etc., thereby reducing the signaling overhead generated by measurement reporting.

For example, the measurement configuration has two states, one is an active state and the other is a non-active state. The measurement configuration in the active state is the currently available configuration, and the terminal will measure the candidate cell and/or candidate cell group according to the measurement configuration in the active state. The measurement configuration in the non-active state is the currently unavailable configuration. Even if the terminal locally stores the measurement configuration in the non-active state, it will not measure the candidate cell or candidate cell group according to the measurement configuration.

The measurement events here may include events A1 to A6 and/or events B1 to B2 and/or events in the mobility process based on conditional triggering.

In the embodiments of the present disclosure, there are multiple ways to shield the terminal from reporting measurement results, and the specific implementation is not limited to any of the above. In some embodiments, the measurement configuration includes:
a measurement object configuration;
   and/or,
a measurement reporting configuration.

For example, the measurement object configuration (measurement object configured) may include the measured frequency point and/or the measured cell reference signal, etc.

The measurement reporting configuration may include indicating which events need to be met to report the measurement results. For example, all or part of events A1 to A6 and/or events B1 to B2 are determined as triggering events for triggering the measurement result reporting.

In some embodiments, the reference cell includes a primary cell and/or a primary secondary cell; and a cell designated by a network device.

The primary cell, the primary secondary cell and the cell designated by the network device are relatively special cells for the terminal. Therefore, as a reference cell, when the configuration of the reference cell is switched from an available state to an unavailable state, the terminal may need to continue using the reference cell and report the measurement result of the reference cell.

In some embodiments, the reference cell includes one or more of a primary cell, a primary secondary cell, and a cell designated by a network device;
and/or,
the reference cell group includes at least one of:
a candidate cell group where the primary cell is located;
a candidate cell group where the primary secondary cell is located; a special cell group composed of the primary cell and the primary secondary cell; and
a cell group designated by the network device.

In some embodiments, if the configuration change occurs in the candidate cell group, and the candidate cell group may include a reference cell group and a non-reference cell group, then the reference cell group may be any one of the above cell groups.

In some embodiments, performing the corresponding operation on the measurement report of the candidate cell or candidate cell group with the changed configuration includes:
the configuration of the candidate cell or candidate cell group being changed from the unavailable state to the available state, and reporting the measurement report of the candidate cell or candidate cell group with the configuration changed to the available state.

The configuration is changed, switching from the unavailable state to the available state. For example, it is adaptively directly determined that the measurement report needs to be reported. In this case, the terminal will resume reporting the measurement report without special instructions from the network device.

In some embodiments, the configuration of the candidate cell or candidate cell group being changed from the unavailable state to the available state, and reporting the measurement report of the candidate cell or candidate cell group with the configuration changed to the unavailable state includes at least one of:
the configuration of the candidate cell or candidate cell group being changed from the unavailable state to the available state, and starting an evaluation of the measurement event of the candidate cell or candidate cell group changed to the available state;
the configuration of the candidate cell or candidate cell group being changed from the unavailable state to the available state, and starting the measurement of the candidate cell or candidate cell group changed to the available state;
the configuration of the candidate cell or candidate cell group being changed from the unavailable state to the available state, and activating the measurement configuration of the candidate cell or candidate cell group changed to the available state; and
the configuration of the candidate cell or candidate cell group being changed from the unavailable state to the available state, and starting the reporting of the measurement result of the candidate cell or candidate cell group changed to the available state.

In the embodiment of the present disclosure, the measurement result reporting of the candidate cell or candidate cell group with the configuration switched from the unavailable state to the available state is realized by starting the evaluation of the measurement event, starting the measurement, activating the measurement configuration, and starting the reporting of the measurement result.

In some embodiments, the configuration of the candidate cell or candidate cell group being changed from the unavailable state to the available state, and starting the reporting of the measurement result of the candidate cell or candidate cell group changed to the available state includes:
the configuration of the candidate cell or candidate cell group being changed from the unavailable state to the available state, and reporting the N1-th measurement result of the candidate cell or candidate cell group changed to the available state before the start time; the N1 is a positive integer;
   or,
the configuration of the candidate cell or candidate cell group being changed from the unavailable state to the available state, and reporting the N2-th measurement result of the candidate cell or candidate cell group changed to the available state before the start time; the N2 is a positive integer.

Assume that when a configuration of a candidate cell or candidate cell group is in an unavailable state, the measurement is not stopped, and the measurement results are retained locally, but the measurement results are not reported. After the configuration is switched from an unavailable state to an available state, the measurement result at the current moment and/or the measurement results of one or more historical moments before the current moment can be reported to a network device such as a base station.

If the reporting of the measurement report will be started after the configuration of the candidate cell and/or candidate cell group is changed to an available state at the current moment, then at this time, the N1-th measurement result at the current moment or the N2-th measurement result before the current moment can be reported to the network device according to the protocol agreement, the pre-definition of the network device such as the base station, or the network instruction.

In some embodiments, if the reporting of the measurement report will be started after the candidate cell and/or candidate cell group configuration is changed to the available state at the current moment, then it is determined whether the N1-th measurement result at the current moment meets the event that triggers the measurement result reporting. If the corresponding event is met, the N1-th measurement result is reported.

In other embodiments, if the reporting of the measurement report will be started after the candidate cell and/or candidate cell group configuration is changed to the available state at the current moment, then it is determined whether there is at least one measurement result in the previous N2 measurement results before the current moment that meets the event that triggers the measurement result reporting. If so, the previous N2 measurement results before the current moment are reported to the network device, or the measurement results in the previous N2 measurement results that meet the event that triggers the measurement result reporting are reported to the network device.

In some embodiments, performing the corresponding operation on the measurement report of the candidate cell or candidate cell group with the changed configuration includes updating the configuration of the candidate cell or candidate cell group, and performing measurement reporting according to the updated configuration of the corresponding candidate cell or candidate cell group.

In some embodiments, if the configuration of the candidate cell and/or candidate cell group is updated, there will be a corresponding update of the measurement configuration, and the measurement of the corresponding candidate cell and/or candidate cell group, the evaluation of measurement events, and the reporting of measurement results are performed according to the updated measurement configuration.

For example, if the measurement configuration of the candidate cell or candidate cell group is not synchronously updated after the configuration of the candidate cell or candidate cell group is updated, the measurement of the candidate cell and candidate cell group, the evaluation of measurement events, and the reporting of measurement reports can be performed with reference to the measurement configuration before the configuration of the candidate cell and/or candidate cell group is updated.

Again, for example, if the measurement configuration is synchronously updated after the configuration of the candidate cell or candidate cell group is updated, the old measurement configuration is deactivated or invalidated, and the measurement of the corresponding candidate cell and/or candidate cell group, the evaluation of measurement events, and the reporting of measurement reports are performed according to the updated measurement configuration.

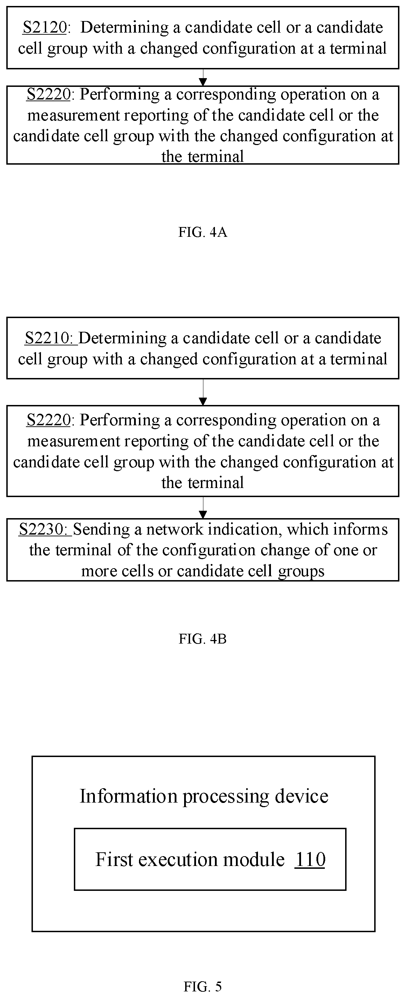

As shown in FIG. 4A, the embodiment of the present disclosure provides an information processing method, which is executed by a network device, and the method includes:
S2120: determining a candidate cell or a candidate cell group with a changed configuration at a terminal.
S2220: performing a corresponding operation on a measurement reporting of the candidate cell or the candidate cell group with the changed configuration at the terminal.

The network device may be an access network device, etc. The access network device may be a base station.

The network device will configure a candidate cell and/or a candidate cell group for the terminal. After the candidate cell and/or the candidate cell group are configured for the terminal, the configuration of the candidate cell and/or the candidate cell group may change due to network capacity switching, user relocation and/or changes in the network environment.

In some embodiments, determining the candidate cell or the candidate cell group with the changed configuration at the terminal may include determining whether the configuration of the candidate cell and/or the candidate cell group of the terminal has changed according to a configured trigger event.

In other embodiments, the candidate cell or the candidate cell group with the changed configuration at the terminal is determined according to the protocol agreement.

In some embodiments, after determining the candidate cell or the candidate cell with the changed configuration at the terminal, the network device such as the base station will inform the terminal through a network indication.

That is, in some embodiments, as shown in FIG. 4B, the embodiment of the present disclosure provides an information processing method, which is executed by a network device, and the method includes:
S2210: determining a candidate cell or a candidate cell group with a changed configuration at a terminal;
S2220: performing a corresponding operation on a measurement reporting of the candidate cell or the candidate cell group with the changed configuration at the terminal.
S2230: sending a network indication, which informs the terminal of the configuration change of one or more cells or candidate cell groups.

The network device such as a base station performs an operation consistent with terminal behavior on the measurement report of the candidate cell or the candidate cell group with the changed configuration according to the network indication. In this way, the network device such a base station can synchronously change the measurement configuration according to the configuration state change of the candidate cell or the candidate cell group without additional network signaling, thereby reducing unnecessary cell measurements, measurement event evaluations and/or measurement result reports.

In some embodiments, performing the corresponding operation on the measurement report of the candidate cell or the candidate cell group with the changed configuration at the terminal includes:
the configuration of the candidate cell or candidate cell group being changed from the available state to the unavailable state, and stopping receiving the measurement report of the candidate cell or candidate cell group with the changed configuration;
   or,
the configuration of the candidate cell or candidate cell group being changed from the unavailable state to the available state, and starting receiving the measurement report of the candidate cell or candidate cell group with the changed configuration;
   or,
updating the configuration of the candidate cell or candidate cell group, and receiving the measurement report according to the updated configuration of the corresponding candidate cell or candidate cell group.

In the embodiment of the present disclosure, if the configuration of the candidate cell or candidate cell group of the terminal is changed to the unavailable state, the network device such as the base station can stop receiving the measurement report of the candidate cell or candidate cell group with the configuration changed to the unavailable state.

If the configuration of the candidate cell or candidate cell group of the terminal is changed to the available state, the network device such as the base station starts receiving the measurement report of the candidate cell and/or candidate cell group with the changed configuration.

If the configuration of the candidate cell or candidate cell group of the terminal is updated, it is determined whether to receive the measurement report of the candidate cell and/or candidate cell group with the updated configuration according to the updated measurement configuration.

In some embodiments, the method further includes determining whether the candidate cell changed from the available state to the available state is a reference cell; and/or determining whether the candidate cell group changed from the available state to the unavailable state is a reference group.

The configuration of the candidate cell or candidate cell group being changed from the available state to the unavailable state, stopping receiving the measurement report of the candidate cell or candidate cell group with the changed configuration includes:
the configuration of the non-reference cell or non-reference cell group being changed from the available state to the unavailable state, stopping receiving the measurement report of the non-reference cell or the non-reference cell group with the configuration changed to the unavailable state; where the non-reference cell is the candidate cell different from the reference cell; the non-reference cell group is the candidate cell group different from the reference cell group.

The candidate cells of the terminal can be classified into reference cells and non-reference cells. When the configuration for the non-reference cell is changed, it is determined whether to receive the measurement report according to the changed state or configuration.

If the configuration that has a state change or content update involves a candidate cell or a candidate cell group, the reception of the measurement report is maintained.

In some embodiments, the reference cell includes a primary cell and/or a primary secondary cell; and a cell designated by a network device.

The primary cell, the primary secondary cell, and the cell designated by a network device are relatively special cells for the terminal. Therefore, as a reference cell, when the configuration of the reference cell is switched from an available state to an unavailable state, the terminal may need to continue using the reference cell and report the measurement result of the reference cell.

In some embodiments, the reference cell group includes a candidate cell group where the primary cell is located, and/or, a candidate cell group where the primary secondary cell is located; and/or, the reference cell group includes a special cell group consisting of the primary cell and the primary secondary cell; and/or, the reference cell group includes a cell group designated by a network device.

When the network side configures the measurement report for the terminal, according to the activation or deactivation signaling of L1 layer/L2 layer signaling sent by the network device on the network side, or according to the configured triggering event, when the terminal changes the serving cell or candidate cell group, the terminal and the base station will respectively perform measurement report related operations on the candidate cell and/or candidate cell with the changed configuration.

For example, the configuration of the serving cell (or serving cell group)-1 is activated, and/or the configuration of the serving cell (or serving cell group)-2 is deactivated, how does the terminal process its measurement and/or measurement configuration.

Processing the measurement and/or measurement configuration of the candidate cell and/or candidate cell group with the changed configuration can be as follows: how to process a measurement event in the evaluation process, how to process a measurement result to be reported, and how to process the measurement configuration.

Through these processes, it is a problem that needs to be solved that the terminal side and the network side can have a consistent understanding of the terminal's measurement behavior. For example, the terminal measures and reports on the cell or candidate cell group-1, but the network device determines that the terminal is measuring and reporting on the cell or candidate cell group-2. At this time, the corresponding network device will continue to receive measurement reports.

Through the terminal processing behavior configured by the network or agreed upon by the protocol, when the terminal changes the serving cell or candidate cell group, the terminal can process the measurements of the serving cell (or serving cell group) before and after the change, so that the terminal side and the network side have the same understanding of the terminal's measurement behavior.

When the configuration of the candidate cell or candidate cell group currently used by the terminal changes, the terminal processes the measurement associated with the configuration of the candidate cell or candidate cell group according to the network configuration or protocol agreement.

The terminal's behavior of processing the measurement includes at least one of:

If the configuration of the candidate cell or candidate cell group changes to an unavailable state, the measurement event corresponding to the candidate cell or candidate cell group associated with the candidate cell or candidate cell group configuration is considered unsatisfied.

If the configuration of the candidate cell or candidate cell group changes to an unavailable state, all measurement events are considered unsatisfied.

If the configuration of the candidate cell or candidate cell group changes to an unavailable state, all measurement events corresponding to the measurement configuration for the mobility process based on conditional triggering are considered unsatisfied.

If the configuration of the candidate cell or candidate cell group changes to an unavailable state, part or all of the measurement configurations associated with the configuration of the candidate cell or candidate cell group are deleted.

The situation where the configuration of the candidate cell or candidate cell group is changed to an unavailable state may include at least one of:
the configuration of the candidate cell or candidate cell group is deactivated;
the configuration of the candidate cell or candidate cell group is instructed to stop using.

The partially deleted measurement configuration includes at least one of:
a measurement event configuration;
a measurement identifier; and
a measurement object configuration.

If the configuration of the candidate cell or candidate cell group is changed to an unavailable state, the candidate cell or candidate cell group measurement corresponding to the candidate cell or candidate cell group associated with the candidate cell or candidate cell group configuration is stopped.

If the configuration of the candidate cell or candidate cell group is changed to an unavailable state, the measurement result corresponding to the candidate cell or candidate cell group associated with the candidate cell or candidate cell group configuration is discarded.

The situation where the configuration of the candidate cell or candidate cell group is changed to an unavailable state may include at least one of:
the configuration of the candidate cell or candidate cell group is deactivated;
the configuration of the candidate cell or candidate cell group is instructed to stop using.

The terminal performs measurement processing on the reference cell or candidate cell group according to the network indication or the protocol agreement.

If the configuration of the candidate cell or candidate cell group is changed to an available state, the evaluation of the measurement event corresponding to the cell or candidate cell group associated with the configuration of the candidate cell or candidate cell group is started.

If the configuration of the candidate cell or candidate cell group is changed to an available state, the measurement of the candidate cell or candidate cell group corresponding to the cell or candidate cell group associated with the configuration of the candidate cell or candidate cell group is started.

If the configuration of the candidate cell or candidate cell group is changed to an available state, the measurement result corresponding to the candidate cell or candidate cell group associated with the configuration of the candidate cell or candidate cell group is reported.

The measurement result of the serving cell reported by the terminal includes the measurement result of the cell or candidate cell group activated for the nth time before the current moment, n is a positive integer greater than or equal to 1, and n is a network configuration or protocol agreement. Here, the nth

The measurement result of the serving cell reported by the terminal includes the measurement result of the cell or candidate cell group activated for n consecutive times, n is a positive integer greater than or equal to 1, and n is a network configuration or protocol agreement.

In some embodiments, when the configuration of the candidate cell or candidate cell group or candidate cell group currently used by the terminal changes, the terminal processes the measurement associated with the configuration of the candidate cell or candidate cell group or candidate cell group according to the network configuration or the protocol agreement.

When the network device determines that the configuration of the candidate cell (or the candidate cell group) currently used by the terminal changes, the network processes the measurement associated with the configuration of the candidate cell or the candidate cell group according to the network configuration or protocol agreement.

Further, processing the measurement associated with the configuration of the candidate cell or the candidate cell group includes at least one of:
considering the measurement result of the candidate cell or candidate cell group or candidate cell group evaluated by the terminal measurement event to be the measurement result of the cell or candidate cell group indicated by the network device or agreed upon by the protocol; and
considering the measurement result of the candidate cell or candidate cell group or candidate cell group reported by the terminal measurement to be the measurement result of the cell or candidate cell group indicated by the network device or agreed upon by the protocol.

Step 1: The network side provides one or more configurations of the candidate cell or candidate cell group or candidate cell group to the terminal side. For example, the configuration of the candidate cell or candidate cell group is provided by the RRCReconfiguration message. At the same time, the network side provides the terminal with the measurement configuration.

The purpose of the measurement configuration includes at least one of:
mobility process based on conditional triggering; and
measurement report.

Step 2: According to one or more configurations of the candidate cell or candidate cell group or candidate cell group in Step 1, when the configuration of the candidate cell or candidate cell group currently used by the terminal changes, the terminal processes the measurement.

The triggering condition for the change of the configuration of the candidate cell or candidate cell group or candidate cell group currently used by the terminal includes any one of:
The terminal receives the indication information sent by the network side to change the configuration of the currently used candidate cell or candidate cell group or candidate cell group, such as DCI, or MAC CE, or RRC message), indicating that the terminal's primary cell (PCell) configuration is changed from candidate cell or candidate cell group configuration-1 to candidate cell or candidate cell group configuration-2.

The terminal meets the pre-configured condition, for example, after the terminal's measurement result for PCell meets the A3 event, the terminal changes the PCell configuration from candidate cell or candidate cell group or candidate cell group configuration-1 to candidate cell or candidate cell group or candidate cell group configuration-2.

The terminal's behavior of processing the measurement includes at least one of:
If the configuration of the candidate cell or candidate cell group or candidate cell group is changed to an unavailable state, for example, the candidate cell and/or candidate cell is deactivated or instructed to stop using, then the measurement event corresponding to the cell or candidate cell group or candidate cell group associated with the configuration of the candidate cell or candidate cell group or candidate cell group is considered unsatisfied. For example, if the configuration of the secondary cell (SCell-1) is changed from candidate cell or candidate cell group or candidate cell group configuration-1 to candidate cell or candidate cell group configuration-2, the measurement event A6 of the SCell-1 associated with the configuration of the candidate cell or candidate cell group is considered unsatisfied.

If the configuration of the candidate cell or candidate cell group or candidate cell group is changed to an unavailable state, for example, the configuration of the candidate cell and/or candidate cell is deactivated or instructed to stop using, all measurement events are considered unsatisfied.

If the configuration of the candidate cell or candidate cell group or candidate cell group is changed to an unavailable state, for example, the configuration of the candidate cell and/or candidate cell is deactivated or instructed to stop using, all measurement events corresponding to the measurement configuration for the mobility process based on the conditional triggering are considered unsatisfied.

If the configuration of the candidate cell or candidate cell group or candidate cell group is changed to an unavailable state, for example, the configuration of the candidate cell and/or candidate cell is activated or instructed to stop using, part or all of the measurement configurations associated with the configuration of the candidate cell or candidate cell group are deleted.

The partially deleted measurement configuration includes at least one of:
a measurement event configuration;
a measurement identifier; and
a measurement object configuration;

If the configuration of the candidate cell or candidate cell group or candidate cell group is changed to an unavailable state, for example, the configuration of the candidate cell or candidate cell group is deactivated or instructed to stop using, then the cell or candidate cell group measurement corresponding to the cell or candidate cell group associated with the configuration of the candidate cell or candidate cell group is stopped.

For example, if the configuration of the PSCell is changed from candidate cell or candidate cell group configuration-1 (corresponding to cell or candidate cell group-1) to candidate cell or candidate cell group configuration-2 (corresponding to cell or candidate cell group-1), the measurement of the cell or candidate cell group-1 associated with the candidate cell or candidate cell group configuration-1 is stopped.

If the configuration of the candidate cell or candidate cell group is changed to an unavailable state, the measurement result corresponding to the cell or candidate cell group associated with the configuration of the candidate cell or candidate cell group is discarded.

For example, if the configuration of the PCell is changed from candidate cell or candidate cell group configuration-1 (corresponding to cell or candidate cell group-1) to candidate cell or candidate cell group configuration-2 (corresponding to cell or candidate cell group-2), the measurement result of the cell or candidate cell group-1 associated with the candidate cell or candidate cell group configuration-1 is discarded.

The terminal performs measurement processing on the reference cell or candidate cell group according to the network indication or the protocol agreement. For example, the configuration of PCell is changed from candidate cell or candidate cell group configuration-1 (corresponding to cell or candidate cell group-1) to candidate cell or candidate cell group configuration-2 (corresponding to cell or candidate cell group-2), and candidate cell or candidate cell group configuration-1 (corresponding to cell or candidate cell group-1) and further candidate cell or candidate cell group configuration-2 (corresponding to cell or candidate cell group-2) are all associated with the PCell. The network side can specify cell or candidate cell group-1 as the reference cell or candidate cell group or candidate cell group for the measurement event evaluation corresponding to PCell.

For example, if the measurement event corresponding to PCell is A3, the PCell measurement corresponding to the A3 event is the measurement of the cell or candidate cell group-1 designated as the reference cell or candidate cell group).

For example, the configuration of PCell is changed from candidate cell or candidate cell group or candidate cell group configuration-1 (corresponding to cell or candidate cell group or candidate cell group-1) to candidate cell or candidate cell group configuration-2 (corresponding to cell or candidate cell group or candidate cell group-2), and candidate cell or candidate cell group or candidate cell group configuration-1 (corresponding to cell or candidate cell group-1) and further candidate cell or candidate cell group or candidate cell group configuration-2 (corresponding to cell or candidate cell group or candidate cell group-2) are all associated with the PCell, and the cell or candidate cell group or candidate cell group-1 with the leading number (or the cell or candidate cell group or candidate cell group-1 with the leading candidate cell or candidate cell group or candidate cell group (list) configuration) can be agreed upon by protocol as the reference cell or candidate cell group or candidate cell group for the evaluation of the measurement event corresponding to PCell.

For example, if the measurement event corresponding to PCell is A3, the PCell measurement corresponding to the A3 event is the measurement of the cell or candidate cell group-1 designated as the reference cell or candidate cell group.

The behavior of the measurement processing on the reference cell or candidate cell group or candidate cell group according to the network indication or the protocol agreement includes at least one of:
measuring the reference cell or candidate cell group or candidate cell group
recording the measurement result of the reference cell or candidate cell group or candidate cell group
reporting the measurement result of the reference cell or candidate cell group or candidate cell group

Use the measurement result of the reference cell or candidate cell group or candidate cell group as the measurement result of the corresponding serving cell or candidate cell group in the measurement event.

Use the measurement result of the reference cell or candidate cell group or candidate cell group as the measurement result of the serving cell or candidate cell group in the measurement report.

If the configuration of the candidate cell or candidate cell group or candidate cell group is changed to an available state, for example, it is activated or instructed to start use, then the evaluation of the measurement event corresponding to the cell or candidate cell group associated with the configuration of the candidate cell or candidate cell group or candidate cell group is started.

For example, if the configuration of SCell-1 is changed from candidate cell or candidate cell group or candidate cell group configuration-1 to candidate cell or candidate cell group or candidate cell group configuration-2, the evaluation of measurement event A6 of SCell-1 associated with the configuration of the candidate cell or candidate cell group configuration is started.

If the candidate cell or candidate cell group or candidate cell group configuration changes to available (e.g., activated or indicated to start use), the cell or candidate cell group measurement corresponding to the cell or candidate cell group or candidate cell group associated with the candidate cell or candidate cell group or candidate cell group configuration is started. (e.g., if the configuration of PSCell changes from candidate cell or candidate cell group configuration-1 (corresponding to cell or candidate cell group-1) to candidate cell or candidate cell group configuration-2 (corresponding to cell or candidate cell group-2), the cell or candidate cell group-1 measurement associated with the candidate cell or candidate cell group configuration-1 is started).

If the candidate cell or candidate cell group configuration is changed to be available (e.g., activated or instructed to start using), the measurement result corresponding to the cell or candidate cell group associated with the candidate cell or candidate cell group configuration is reported.

For example, if the configuration of PCell is changed from candidate cell or candidate cell group configuration-1 (corresponding to cell or candidate cell group-1) to candidate cell or candidate cell group configuration-2 (corresponding to cell or candidate cell group-2), the measurement result of the cell or candidate cell group-1 associated with candidate cell or candidate cell group configuration-1 is reported after the measurement event is met.

The measurement result of the serving cell reported by the terminal includes the measurement result of the cell or candidate cell group activated for the nth time, where n is a positive integer greater than or equal to 1, and n is a network configuration or protocol agreement.

For example, the configuration of PCell changes from candidate cell or candidate cell group configuration-1 (corresponding to cell or candidate cell group-1) to candidate cell or candidate cell group configuration-2 (corresponding to cell or candidate cell group-2), and the measurement result of the currently activated cell corresponds to n=1, corresponding to candidate cell or candidate cell group configuration-2 (corresponding to cell or candidate cell group-2). The measurement result of the cell activated the last time corresponds to n=2, corresponding to candidate cell or candidate cell group configuration-1 (corresponding to cell or candidate cell group-1), and so on.

The measurement result of the serving cell reported by the terminal includes the measurement result of the cell or candidate cell group that is activated for n consecutive times, where n is a positive integer greater than or equal to 1, and n is a network configuration or protocol agreement. (For example, the configuration of PCell changes from candidate cell or candidate cell group configuration-1 (corresponding to cell or candidate cell group-1) to candidate cell or candidate cell group configuration-2 (corresponding to cell or candidate cell group-2). When n=1, the terminal only reports the measurement result of the currently activated cell-2. When n=2, the terminal reports the measurement results of the currently activated cell-2 and the previously activated cell-1, and so on.

The cell or candidate cell group in the above-mentioned terminal's behavior of processing the measurement can be limited to the serving cell or the candidate cell group.

The purpose of the measurement configuration in the above-mentioned terminal's behavior of processing the measurement can be limited to any one of:
mobility process based on conditional triggering; and
measurement report.

The configuration of the candidate cell or candidate cell group is changed to unavailable or the configuration of the candidate cell or candidate cell group is changed to available, as mentioned above, can be a cell configuration change process. For example, the configuration of cell-1 is changed from configuration-1 to configuration-2.

The above-mentioned reference cell or candidate cell group can be configured, by agreement, as a cell or candidate cell group associated with the configuration of the candidate cell or candidate cell group currently activated to be used.

As shown in FIG. 5, the embodiment of the present disclosure provides an information processing device, the device including:
a first execution module 110, configured to perform a corresponding operation on the measurement of the candidate cell or candidate cell group with the changed configuration.

The information processing device may include a terminal.

In some embodiments, the first execution module 110 may be a program module. The program module can be executed by the processor to implement the above operations.

In some other embodiments, the first execution module 110 may be a soft-hard combination module. The soft-hard combination module includes but is not limited to various programmable arrays. The programmable array includes but is not limited to field programmable arrays and/or complex programmable arrays.

In some other embodiments, the first execution module 110 may be a pure hardware module. The pure hardware module includes but is not limited to a dedicated integrated circuit.

In some embodiments, the execution module is configured to not report the measurement report of the candidate cell or candidate cell group with the configuration changed to an unavailable state when the configuration of the candidate cell or candidate cell group is changed from an available state to an unavailable state.

In some embodiments, the device further includes:
a first determination module, configured to determine whether the candidate cell changed from the available state to the unavailable state is a reference cell; and/or, determine whether the candidate cell group changed from the available state to the unavailable state is a reference group.

The first execution module 110 is configured to not report the measurement report of the non-reference cell or the non-reference cell group with the configuration changed to the unavailable state when the configuration of the non-reference cell or the non-reference cell group is changed from the available state to the unavailable state; where the non-reference cell is the candidate cell different from the reference cell; the non-reference cell group is the candidate cell group different from the reference cell group.

In some embodiments, the first execution module 110 is configured to maintain the reporting of the measurement report of the reference cell according to the measurement configuration of the reference cell when the candidate cell changed from the available state to the unavailable state is the reference cell; or the first execution module 110 is configured to maintain the reporting of the measurement report of the reference cell group according to the measurement configuration of the reference cell group when the candidate cell group changed from the available state to the unavailable state is the reference cell group.

In some embodiments, the first execution module 110 is specifically configured to execute at least one of:
the configuration of the candidate cell or candidate cell group is changed from an available state to an unavailable state, and it is determined that the measurement event for the configuration of the candidate cell or candidate cell group with the configuration changed to an unavailable state is not satisfied;
the configuration of the candidate cell or candidate cell group is changed from an available state to an unavailable state, and it is determined that all measurement events of the candidate cell or candidate cell group with the configuration changed to an unavailable state are not satisfied;
the configuration of the candidate cell or candidate cell group is changed from an available state to an unavailable state, and it is determined that the measurement event associated with the mobility process based on the conditional triggering is not satisfied;
the configuration of the candidate cell or candidate cell group is changed from an available state to an unavailable state, and the measurement configuration of the candidate cell or candidate cell group with the configuration changed to an unavailable state is partially or completely deleted;
the configuration of the candidate cell or candidate cell group is changed from an available state to an unavailable state, and the measurement of the candidate cell or candidate cell group with the configuration changed to an unavailable state is stopped;
the configuration of the candidate cell or candidate cell group is changed from an available state to an unavailable state, and the measurement result of the candidate cell or candidate cell group with the configuration changed to an unavailable state is discarded; and
the configuration of the candidate cell or candidate cell group is changed from an available state to an unavailable state, and the measurement configuration of the candidate cell or candidate cell group with the configuration changed to an unavailable state is deactivated.

In some embodiments, the measurement configuration includes:
a measurement object configuration;
   and/or,
a measurement reporting configuration.

In some embodiments, the reference cell includes a primary cell and/or a primary secondary cell and/or a cell designated by a network device;
and/or,
the reference cell group includes a candidate cell group where the primary cell is located, and/or, a candidate cell group where the primary secondary cell is located;
   and/or,
the reference cell group includes a special cell group consisting of the primary cell and the primary secondary cell;
   and/or,
the reference cell group includes a cell group designated by a network device.

In some embodiments, the first execution module 110 is configured to report a measurement report of the candidate cell or candidate cell group with the configuration changed to an available state when the configuration of the candidate cell or candidate cell group is changed from an unavailable state to an available state.

In some embodiments, the first execution module 110 is configured to perform at least one of:
when the configuration of the candidate cell or candidate cell group is changed from an unavailable state to an available state, starting the evaluation of the measurement event of the candidate cell or candidate cell group with the configuration changed to the available state;
when the configuration of the candidate cell or candidate cell group is changed from an unavailable state to an available state, starting the measurement of the candidate cell or candidate cell group with the configuration changed to the available state;
when the configuration of the candidate cell or candidate cell group is changed from an unavailable state to an available state, activating the measurement configuration of the candidate cell or candidate cell group with the configuration changed to the available state; and
when the configuration of the candidate cell or candidate cell group is changed from an unavailable state to an available state, starting the reporting of the measurement result of the candidate cell or candidate cell group with the configuration changed to the available state.

In some embodiments, the first execution module 110 is configured to report the N1-th measurement result of the candidate cell or candidate cell group with the configuration changed to the available state before the start time when the configuration of the candidate cell or candidate cell group is changed from an unavailable state to an available state; N1 is a positive integer; or, report the N2-th measurement result of the candidate cell or candidate cell group with the configuration changed to the available state before the start time when the configuration of the candidate cell or candidate cell group is changed from an unavailable state to an available state; N2 is a positive integer.

In some embodiments, the first execution module 110 is configured to perform measurement report according to the updated configuration of the corresponding candidate cell or candidate cell group when the configuration of the candidate cell or candidate cell group is updated.

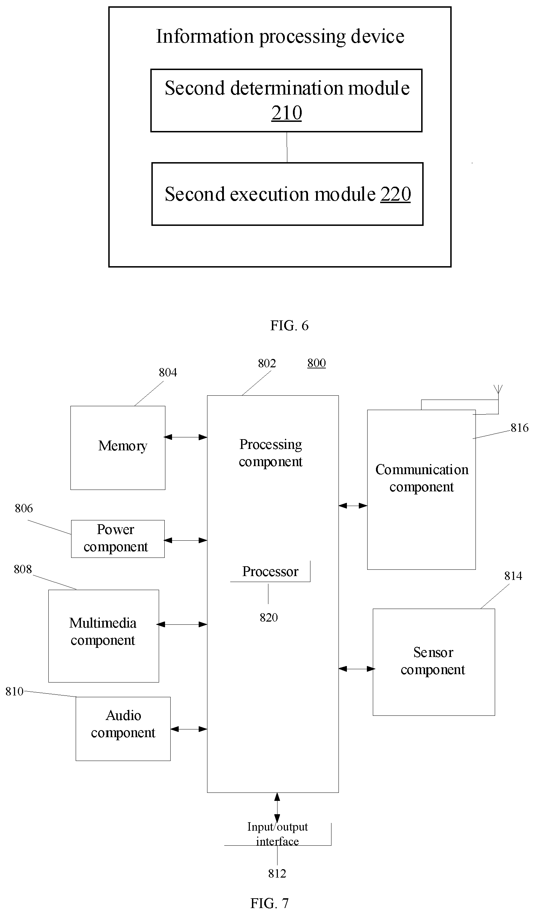

As shown in FIG. 6, the embodiment of the present disclosure provides an information processing device, the device including:
a second determination module 210 configured to determine a candidate cell or candidate cell group with a changed configuration at a terminal;
a second execution module 220 configured to perform a corresponding operation on a measurement report of the candidate cell or candidate cell group with the changed configuration at the terminal.

The information processing device may further include a network device such as a base station.

In some embodiments, the second determination module 210 and the second execution module 220 may include a program module. The program module can implement the above operations.

In some other embodiments, the second determination module 210 and the second execution module 220 may be a combination of soft and hard modules. The combination of soft and hard modules includes but are not limited to various programmable arrays. The programmable arrays include but are not limited to field programmable arrays and/or complex programmable arrays.

In some other embodiments, the second determination module 210 and the second execution module 220 may be pure hardware modules. The pure hardware modules include but are not limited to application-specific integrated circuits.

In some embodiments, the second execution module 220 is configured to perform at least one of:
the configuration of the candidate cell or candidate cell group being changed from an available state to an unavailable state, and stopping receiving the measurement report of the candidate cell or candidate cell group with the changed configuration;
   or,
the configuration of the candidate cell or candidate cell group being changed from an unavailable state to an available state, and starting receiving the measurement report of the candidate cell or candidate cell group with the changed configuration;
   or,
the configuration of the candidate cell or candidate cell group being updated, and performing the measurement report reception according to the updated configuration of the corresponding candidate cell or candidate cell group.

In some embodiments, the device further includes:
a third determination module, configured to determine whether the candidate cell with the configuration changed from the available state to the available state is a reference cell; and/or, to determine whether the candidate cell group changed from the available state to the available state is a reference group.

The second execution module 220 is configured to stop the measurement report of the non-reference cell or the non-reference cell group with the configuration changed to the unavailable state when the configuration of the non-reference cell or the non-reference cell group is changed from the available state to the unavailable state; where the non-reference cell is the candidate cell different from the reference cell; and the non-reference cell group is the candidate cell group different from the reference cell group.

In some embodiments, the device further includes:
a sending module, configured to send a network indication; where the network indication indicates the configuration change of the candidate cell or the candidate cell group of the terminal.

The embodiment of the present disclosure provides a communication device, including:
a memory for storing processor executable instructions; and
a processor, respectively connected to the memory;
where the processor is configured to execute the information processing method provided by any of the aforementioned technical solutions.

The processor may include various types of storage media, which are non-transitory computer storage media that can continue to memorize information stored thereon after the communication device loses power.

Here, the communication device includes a terminal or a network device such as a base station, etc.

The processor may be connected to the memory through a bus or the like, and is configured to read an executable program stored on the memory, for example, at least one of the methods shown in FIG. 2, FIG. 3A, FIG. 3B, and FIG. 4A to FIG. 4B.

FIG. 7 is a block diagram of a terminal 800 according to an example embodiment. For example, the terminal 800 may be a mobile phone, a computer, a digital broadcast user device, a messaging device, a game console, a tablet device, a medical device, a fitness device, a personal digital assistant, etc.

Referring to FIG. 7, the terminal 800 may include one or more of the following components: a processing component 802, a memory 804, a power component 806, a multimedia component 808, an audio component 810, an input/output (I/O) interface 812, a sensor component 814, and a communication component 816.

The processing component 802 generally controls the overall operation of the terminal 800, such as operations associated with display, phone calls, data communications, camera operations, and recording operations. The processing component 802 may include one or more processors 820 to execute instructions to generate all or part of the steps of the above-mentioned method. In addition, the processing component 802 may include one or more modules to facilitate the interaction between the processing component 802 and other components. For example, the processing component 802 may include a multimedia module to facilitate the interaction between the multimedia component 808 and the processing component 802.

The memory 804 is configured to store various types of data to support operations at the terminal 800. Examples of such data include instructions for any application or method operating on the terminal 800, contact data, phone book data, messages, pictures, videos, etc. The memory 804 may be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or optical disk.

The power component 806 provides power to various components of the terminal 800. The power component 806 may include a power management system, one or more power supplies, and other components associated with generating, managing and distributing power for the terminal 800.

The multimedia component 808 includes a screen that provides an output interface between the terminal 800 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, slide, and gestures on the touch panel. The touch sensor may not only sense the boundaries of the touch or slide action, but also detect the duration and pressure associated with the touch or slide operation. In some embodiments, the multimedia component 808 includes a front camera and/or a rear camera. When the terminal 800 is in an operating mode, such as a shooting mode or a video mode, the front camera and/or the rear camera can receive external multimedia data. Each front camera and the rear camera can be a fixed optical lens system or have focal length and optical zoom capabilities.

The audio component 810 is configured to output and/or input audio signals. For example, the audio component 810 includes a microphone (MIC), and when the terminal 800 is in an operating mode, such as a call mode, a recording mode, and a voice recognition mode, the microphone is configured to receive an external audio signal. The received audio signal can be further stored in the memory 804 or sent via the communication component 816. In some embodiments, the audio component 810 also includes a speaker for outputting audio signals.

The I/O interface 812 provides an interface between the processing component 802 and the peripheral interface module. The peripheral interface module can be a keyboard, a click wheel, a button, etc. These buttons may include but are not limited to a home button, a volume button, a start button, and a lock button.

The sensor assembly 814 includes one or more sensors for providing various aspects of status assessment for the terminal 800. For example, the sensor assembly 814 can detect the open/closed state of the device 800, the relative positioning of the components, such as the display and keypad of the terminal 800, and the sensor assembly 814 can also detect the position change of the terminal 800 or a component of the terminal 800, the presence or absence of user contact with the terminal 800, the orientation or acceleration/deceleration of the terminal 800, and the temperature change of the terminal 800. The sensor assembly 814 can include a proximity sensor configured to detect the presence of nearby objects without any physical contact. The sensor assembly 814 can also include an optical sensor, such as a CMOS or CCD image sensor, for use in imaging applications. In some embodiments, the sensor assembly 814 can also include an acceleration sensor, a gyroscope sensor, a magnetic sensor, a pressure sensor, or a temperature sensor.

The communication component 816 is configured to facilitate wired or wireless communication between the terminal 800 and other devices. The terminal 800 can access a wireless network based on a communication standard, such as WiFi, 2G or 3G, or a combination thereof. In an example embodiment, the communication component 816 receives a broadcast signal or broadcast related information from an external broadcast management system via a broadcast channel. In an example embodiment, the communication component 816 also includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an example embodiment, the terminal 800 can be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components for performing the above method.

In an example embodiment, a non-transitory computer-readable storage medium including instructions is also provided, such as a memory 804 including instructions, and the above instructions can be executed by a processor 820 of the terminal 800 to generate the above method. For example, the non-transitory computer-readable storage medium can be a ROM, a random-access memory (RAM), a CD-ROM, a tape, a floppy disk, an optical data storage device, etc.

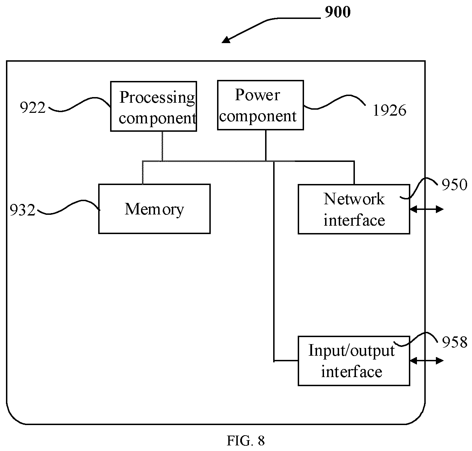

As shown in FIG. 8, an embodiment of the present disclosure shows a structure of an access device. For example, the communication device 900 may be provided as a network side device. The communication device may be various network elements such as the aforementioned access network element and/or network function.

Referring to FIG. 8, the communication device 900 includes a processing component 922, which further includes one or more processors, and a memory resource represented by a memory 932 for storing instructions executable by the processing component 922, such as an application. The application stored in the memory 932 may include one or more modules each corresponding to a set of instructions. In addition, the processing component 922 is configured to execute instructions to execute any of the aforementioned methods applied to the access device, such as at least one of the methods shown in FIG. 2, FIG. 3A, FIG. 3B, and FIG. 4A to FIG. 4B.

The communication device 900 may also include a power component 926 configured to perform power management of the communication device 900; a wired or wireless network interface 950 configured to connect the communication device 900 to a network; and an input/output (I/O) interface 958. The communication device 900 can operate based on an operating system stored in the memory 932, such as Windows Server TM, Mac OS XTM, UnixTM, LinuxTM, FreeBSDTM or the like.

Other embodiments of the present disclosure will be readily apparent to those skilled in the art after considering the specification and practicing the present disclosure herein. The present disclosure is intended to cover any variation, use or adaptation of the present disclosure that follows the general principles of the present disclosure and includes common knowledge or conventional techniques in the art that are not disclosed in the present disclosure. The description and embodiments are to be regarded as exemplary only, and the true scope and spirit of the present disclosure are indicated by the following claims.

It should be understood that the present disclosure is not limited to the precise structure described above and shown in the accompanying drawings, and various modifications and changes may be made without departing from the scope thereof. The scope of the present disclosure is limited only by the appended claims.

## Claims

1. An information processing method, performed by a terminal, comprising:
performing a corresponding operation on a measurement of a candidate cell or a candidate cell group with a changed configuration.

2. The method according to claim 1, wherein performing the corresponding operation on the measurement of the candidate cell or the candidate cell group with the changed configuration comprises:
the configuration of the candidate cell or the candidate cell group being changed from an available state to an unavailable state, and not reporting a measurement report of the candidate cell or the candidate cell group with the configuration changed to the unavailable state.

3. The method according to claim 2, wherein,
the candidate cell comprises a reference cell and a non-reference cell; and/or, the candidate cell group comprises a reference cell group and a non-reference cell group;
the configuration of the candidate cell or the candidate cell group being changed from the available state to the unavailable state, and not reporting the measurement report of the candidate cell or the candidate cell group with the configuration changed to the unavailable state comprises:
the configuration of the non-reference cell or the non-reference cell group being changed from the available state to the unavailable state, and not reporting the measurement report of the non-reference cell or the non-reference cell group with the configuration changed to the unavailable state.

4. The method according to claim 1, wherein performing the corresponding operation for the measurement of the candidate cell or candidate cell group with the changed configuration comprises:
in response to determining that the configuration of the candidate cell is changed from an available state to an unavailable state and the candidate cell is a reference cell, maintaining reporting of a measurement report of the reference cell according to a measurement configuration of the reference cell;
or,
in response to determining that the configuration of the candidate cell group is changed from the available state to the unavailable state and the candidate cell group is a reference cell group, maintaining reporting of a measurement report of the reference cell group according to a measurement configuration of the reference cell group.

5. The method according to any one of claims 2 to 4, wherein the configuration of the candidate cell or the candidate cell group being changed from the available state to the unavailable state, and not reporting the measurement report of the candidate cell or the candidate cell group with the configuration changed to the unavailable state comprises at least one of:
the configuration of the candidate cell or candidate cell group being changed from the available state to the unavailable state, and determining that a measurement event for the configuration of the candidate cell or candidate cell group with the configuration changed to the unavailable state is not satisfied;
the configuration of the candidate cell or candidate cell group being changed from the available state to the unavailable state, and determining that all measurement events of the candidate cell or candidate cell group with the configuration changed to the unavailable state are not satisfied;
the configuration of the candidate cell or candidate cell group being changed from the available state to the unavailable state, and determining that a measurement event associated with a mobility process based on conditional triggering is not satisfied;
the configuration of the candidate cell or candidate cell group being changed from the available state to the unavailable state, and partially or completely deleting a measurement configuration of the candidate cell or candidate cell group with the configuration changed to the unavailable state;
the configuration of the candidate cell or candidate cell group being changed from the available state to the unavailable state, and stopping measurement of the candidate cell or candidate cell group with the configuration changed to the unavailable state;
the configuration of the candidate cell or candidate cell group being changed from the available state to the unavailable state, and discarding a measurement result of the candidate cell or candidate cell group with the configuration changed to the unavailable state;
the configuration of the candidate cell or candidate cell group being changed from an available state to an unavailable state, and deactivating a measurement configuration of the candidate cell or candidate cell group with the configuration changed to the unavailable state.

6. The method according to any one of claims 4 or 5, wherein the measurement configuration comprises:
a measurement object configuration;
and/or,
a measurement reporting configuration.

7. The method according to any one of claims 2 to 6, wherein,
the reference cell comprises one or more of a primary cell, a primary secondary cell, and a cell designated by a network device;
and/or,
the reference cell group comprises at least one of:
a candidate cell group where the primary cell is located;
a candidate cell group where the primary secondary cell is located; a special cell group composed of the primary cell and the primary secondary cell;
a cell group designated by the network device.

8. The method according to claim 1, wherein performing the corresponding operation on the measurement reporting of the candidate cell or the candidate cell group with the changed configuration comprises:
the configuration of the candidate cell or candidate cell group being changed from an unavailable state to an available state, and reporting a measurement report of the candidate cell or candidate cell group with the configuration changed to the available state.

9. The method according to claim 8, wherein the configuration of the candidate cell or candidate cell group being changed from the unavailable state to the available state, and reporting the measurement report of the candidate cell or candidate cell group with the configuration changed to the available state comprises at least one of:
the configuration of the candidate cell or candidate cell group being changed from the unavailable state to the available state, and starting evaluation of a measurement event of the candidate cell or candidate cell group with the configuration changed to the available state;
the configuration of the candidate cell or candidate cell group being changed from the unavailable state to the available state, and starting measurement of the candidate cell or candidate cell group changed to the available state;
the configuration of the candidate cell or candidate cell group being changed from the unavailable state to the available state, and activating a measurement configuration of the candidate cell or candidate cell group with the configuration changed to the available state;
the configuration of the candidate cell or candidate cell group being changed from the unavailable state to the available state, and starting reporting of a measurement result of the candidate cell or candidate cell group with the configuration changed to the available state.

10. The method according to claim 9, wherein the configuration of the candidate cell or candidate cell group being changed from the unavailable state to the available state, and starting reporting of the measurement result of the candidate cell or candidate cell group with the configuration changed to the available state comprises:
the configuration of the candidate cell or candidate cell group being changed from the unavailable state to the available state, and reporting a N1-th measurement result of the candidate cell or candidate cell group with the configuration changed to the available state before start time; the N1 is a positive integer;
or,
the configuration of the candidate cell or candidate cell group being changed from the unavailable state to the available state, and reporting a N2-th measurement result of the candidate cell or candidate cell group with the configuration changed to the available state before the start time; the N2 is a positive integer.

11. The method according to claim 1, wherein performing the corresponding operation on the measurement reporting of the candidate cell or the candidate cell group with the changed configuration comprises:
the configuration of the candidate cell or candidate cell group being updated, and performing measurement report according to an updated configuration of a corresponding candidate cell or candidate cell group.

12. An information processing method, performed by a network device, comprising:
determining a candidate cell or candidate cell group with a changed configuration at a terminal; and
performing a corresponding operation on measurement reporting of the candidate cell or candidate cell group with the changed configuration at the terminal.

13. The method according to claim 12, wherein performing the corresponding operation on the measurement reporting of the candidate cell or candidate cell group with the changed configuration at the terminal comprises:
the configuration of the candidate cell or candidate cell group being changed from an available state to an unavailable state, and stopping receiving a measurement report of the candidate cell or candidate cell group with the changed configuration;
or,
the configuration of the candidate cell or candidate cell group being changed from the unavailable state to the available state, and starting receiving the measurement report of the candidate cell or candidate cell group with the changed configuration;
or,
the configuration of the candidate cell or candidate cell group being updated, and performing measurement report reception according to an updated configuration of a corresponding candidate cell or candidate cell group.

14. The method according to claim 12 or 13, wherein the candidate cell comprises a reference cell and a non-reference cell; and/or, the candidate cell group comprises a reference cell group and a non-reference cell group;
the configuration of the candidate cell or candidate cell group being changed from the available state to the unavailable state, and stopping receiving a measurement report of the candidate cell or candidate cell group with the changed configuration comprises:
the configuration of the non-reference cell or the non-reference cell group being changed from the available state to the unavailable state, and stopping receiving the measurement report of the non-reference cell or the non-reference cell group with the configuration changed to the unavailable state.

15. The method according to any one of claims 12 to 14, further comprising:
sending a network indication; wherein the network indication indicates a configuration change of the candidate cell or the candidate cell group of the terminal.

16. An information processing device, comprising:
a first execution module, configured to perform a corresponding operation on a measurement of a candidate cell or a candidate cell group with a changed configuration.

17. The device according to claim 16, wherein the execution module is configured to, in response to the configuration of the candidate cell or candidate cell group being changed from an available state to an unavailable state, not report a measurement report of the candidate cell or candidate cell group with the configuration changed to the unavailable state.

18. The device according to claim 17, wherein the candidate cell comprises a reference cell and a non-reference cell; and/or the candidate cell group comprises a reference cell group and a non-reference cell group;
the first execution module is configured to, in response to the configuration of the non-reference cell or the non-reference cell group being changed from the available state to the unavailable state, not report a measurement report of the non-reference cell or the non-reference cell group with the configuration changed to the unavailable state.

19. The device according to claim 16, wherein the first execution module is configured to, in response to determining that the configuration of the candidate cell is changed from an available state to an unavailable state and the candidate cell is a reference cell, maintain reporting of a measurement report of the reference cell according to a measurement configuration of the reference cell; or, in response to determining that the configuration of the candidate cell group is changed from an available state to an unavailable state and the candidate cell group is a reference cell group, maintain reporting of a measurement report of the reference cell group according to a measurement configuration of the reference cell group.

20. The device according to any one of claims 17 to 19, wherein the first execution module is specifically configured to execute at least one of:
the configuration of the candidate cell or candidate cell group being changed from the available state to the unavailable state, and determining that a measurement event for the configuration of the candidate cell or candidate cell group with the configuration changed to the unavailable state is not satisfied;
the configuration of the candidate cell or candidate cell group being changed from the available state to the unavailable state, and determining that all measurement events for the candidate cell or candidate cell group with the configuration changed to the unavailable state are not satisfied;
the configuration of the candidate cell or candidate cell group being changed from the available state to the unavailable state, and determining that a measurement event associated with a mobility process based on conditional triggering is not satisfied;
the configuration of the candidate cell or candidate cell group being changed from the available state to the unavailable state, and partially or completely deleting a measurement configuration of the candidate cell or candidate cell group with the configuration changed to the unavailable state;
the configuration of the candidate cell or candidate cell group being changed from the available state to the unavailable state, and stopping measurement of the candidate cell or candidate cell group with the configuration changed to the unavailable state;
the configuration of the candidate cell or candidate cell group being changed from the available state to the unavailable state, and discarding a measurement result of the candidate cell or candidate cell group with the configuration changed to the unavailable state; and
the configuration of the candidate cell or candidate cell group being changed from the available state to the unavailable state, and deactivating a measurement configuration of the candidate cell or candidate cell group with the configuration changed to unavailable.

21. The device according to any one of claims 19 or 20, wherein the measurement configuration comprises:
a measurement object configuration;
and/or,
a measurement reporting configuration.

22. The device according to any one of claims 17 to 21, wherein,
the reference cell comprises one or more of a primary cell, a primary secondary cell, and a cell designated by a network device;
and/or,
the reference cell group comprises at least one of:
a candidate cell group where the primary cell is located;
a candidate cell group where the primary secondary cell is located;
a special cell group composed of the primary cell and the primary secondary cell; and
a cell group designated by the network device.

23. The device according to claim 16, wherein the first execution module is configured to, in response to the configuration of the candidate cell or candidate cell group being changed from an unavailable state to an available state, report a measurement report of the candidate cell or candidate cell group with the configuration changed to the available state.

24. The device according to claim 23, wherein the first execution module is configured to execute at least one of:
the configuration of the candidate cell or candidate cell group being changed from the unavailable state to the available state, and starting evaluation of a measurement event of the candidate cell or candidate cell group with the configuration changed to the available state;
the configuration of the candidate cell or candidate cell group being changed from the unavailable state to the available state, and starting measurement of the candidate cell or candidate cell group with the configuration changed to the available state;
the configuration of the candidate cell or candidate cell group being changed from the unavailable state to the available state, and activating a measurement configuration of the candidate cell or candidate cell group with the configuration changed to the available state; and
the configuration of the candidate cell or candidate cell group being changed from the unavailable state to the available state, and starting reporting of a measurement result of the candidate cell or candidate cell group with the configuration changed to the available state.

25. The device according to claim 24, wherein the first execution module is configured to, in response to the configuration of the candidate cell or candidate cell group being changed from the unavailable state to the available state, report a N1-th measurement result of the candidate cell or candidate cell group with the configuration changed to the available state before start time; the N1 is a positive integer; or, in response to the configuration of the candidate cell or candidate cell group being changed from the unavailable state to the available state, report a N2-th measurement result of the candidate cell or candidate cell group with the configuration changed to the available state before the start time; the N2 is a positive integer.

26. The device according to claim 16, wherein the first execution module is configured to, in response to the configuration of the candidate cell or candidate cell group being updated, perform measurement reporting according to an updated configuration of a corresponding candidate cell or candidate cell group.

27. An information processing device, comprising:
a second determination module, configured to determine a candidate cell or a candidate cell group with a changed configuration at a terminal; and
a second execution module, configured to perform a corresponding operation on measurement reporting of the candidate cell or candidate cell group with the changed configuration at the terminal.

28. The device according to claim 27, wherein the second execution module is configured to perform at least one of:
the configuration of the candidate cell or candidate cell group being changed from an available state to an unavailable state, and stopping receiving a measurement report of the candidate cell or candidate cell group with the changed configuration;
or,
the configuration of the candidate cell or candidate cell group being changed from the unavailable state to the available state, and starting receiving the measurement report of the candidate cell or candidate cell group with the changed configuration;
or,
the configuration of the candidate cell or candidate cell group being updated, and performing measurement report reception according to an updated configuration of a corresponding candidate cell or candidate cell group.

29. The device according to claim 27 or 28, wherein the candidate cell comprises a reference cell and a non-reference cell; and/or, the candidate cell group comprises a reference cell group and a non-reference cell group; the second execution module is configured to, in response to the configuration of the non-reference cell or the non-reference cell group being changed from an available state to an unavailable state, stop measurement report of the non-reference cell or the non-reference cell group with the configuration changed to the unavailable state.

30. The device according to any one of claims 27 to 29, further comprising:
a sending module configured to send a network indication; wherein the network indication indicates a configuration change of the candidate cell or the candidate cell group of the terminal.

31. A communication device comprising a processor, a transceiver, a memory, and an executable program stored on the memory and capable of being run by the processor, wherein the processor executes the method according to any one of claims 1 to 11 or 12 to 15 when running the executable program.

32. A computer storage medium, wherein the computer storage medium stores an executable program; after the executable program is executed by the processor, the method according to any one of claims 1 to 11 or 12 to 15 can be implemented.
